# EUROPEAN PATENT SPECIFICATION

(11) **EP 4 091 692 B1**
(45) Date of publication and mention of the grant of the patent: **01.10.2025**
(21) Application number: 21175337.1
(22) Date of filing: 21.05.2021
(51) Int. Cl.: B01D 29/21, B01D 35/147, B01D 35/16

(54) **A FILTER SYSTEM WITH A FILTER ELEMENT AND A SAFETY ASSEMBLY, A SAFETY ASSEMBLY AND A FILTER ELEMENT**
FILTERSYSTEM MIT EINEM FILTERELEMENT UND EINER SICHERHEITSANORDNUNG, EINE SICHERHEITSANORDNUNG UND EIN FILTERELEMENT
SYSTÈME DE FILTRE AVEC UN ÉLÉMENT DE FILTRE ET UN ENSEMBLE DE SÉCURITÉ, ENSEMBLE DE SÉCURITÉ ET ÉLÉMENT DE FILTRE

(43) Date of publication of application: 23.11.2022
(73) Proprietor: MANN+HUMMEL GmbH, 71636 Ludwigsburg (DE)
(72) Inventor: SVOBODA, Jan, 675 07 Cíhalín (CZ)
(74) Representative: Mann + Hummel Intellectual Property

(56) References cited:
- EP-A1- 2 604 321
- EP-A1- 4 146 371
- EP-B1- 2 699 329
- EP-B1- 4 043 082
- WO-A1-2019/142123
- WO-A2-2013/003762
- CN-A- 106 014 538
- DE-A1- 102016 124 587
- DE-B3- 102020 130 142
- US-A1- 2010 140 151
- US-A1- 2015 033 689
- US-A1- 2017 216 745
- US-A1- 2019 176 076
- US-A1- 2022 347 617
- US-A1- 2023 014 292
- US-A1- 2023 047 344
- US-A1- 2023 105 340
- US-A1- 2023 108 329
- US-A1- 2023 201 750
- US-A1- 2023 256 366
- US-A1- 2023 256 372
- US-A1- 2023 264 125
- US-A1- 2023 272 728
- US-A1- 2023 321 566
- US-A1- 2023 321 618
- US-A1- 2023 332 518
- US-A1- 2023 338 959
- US-A1- 2023 390 493
- US-A1- 2023 415 085
- US-A1- 2024 001 387
- US-A1- 2024 075 413
- US-A1- 2024 173 657
- US-A1- 2024 182 326
- US-B2- 11 465 744
- US-B2- 11 644 111
- US-B2- 11 731 068
- US-B2- 12 053 727
- US-B2- 9 044 698
- US-B2- 9 731 235

## Description

### Technical Field

The invention relates to a filter system with a filter element and a safety assembly, a safety assembly and a filter element for such a filter system.

### Prior Art

Such filter systems or filter elements are used for filtering gaseous or liquid fluids. In motor vehicles and industrial engines such filter systems are used for filtering especially fuel, especially diesel fuel or gasoline, motor oil or hydraulic oil.

US 20150033689 A1 discloses a filter system for filtering fluids which has a housing, an inlet, and an outlet. A filter element is arranged inside the housing. A cover closes the housing and provides access to the filter element inside the housing. A securing device prevents the housing from being closed by the cover when the filter element is missing. The filter element has at least one filter element guide path section. The housing or the cover has a rim area with at least one rim guide path section. The filter element guide path section and the rim guide path section supplement one another to a guide path. The securing device comprises at least one securing element arranged on the cover or the housing. The securing element is guided on the guide path when a closing movement is carried out for closing the housing by the cover.

US9731235 discloses a filter appliance comprising: a filter housing and a ring filter element having an axis and being mountable in the filter housing, the ring filter element including a first axial end disc, having an axially protruding pin configured to engage into a channel of the filter housing when the ring filter element is mounted in the filter housing, the filter housing defining an interior having a first region, the ring filter element having a second region associated with the first region, a guide contour arranged on one of the first region and the second region, a first guide element disposed on the other of the first region and the second region, wherein the first guide element is configured to be guided on the guide contour during the mounting of the ring filter element in the filter housing, the guide contour including a first axial groove, wherein the axially protruding pin engages into the channel and the first guide element engages into the first axial groove of the guide contour when the ring filter element is mounted in the filter housing, the guide contour further including at least one second axial groove, and a second guide element disposed on the one of the first region and the second region including the first guide element, the second guide element associated with a second axial groove disposed on the guide contour, wherein the first axial grooves and the second axial groove are disposed complementary to the associated first guide elements and the second guide element to define a lock and key interaction between the filter housing and the ring filter element.

### Disclosure of the Invention

It is an object of the invention to provide a filter system with a filter element and a safety assembly which allows for a reliable and correct mounting of the filter element.

Another object of the invention is to provide a safety assembly for such a filter system.

Another object of the invention is to provide a filter element for such a filter system.

The first object is achieved by a filter system comprising a housing with a housing head and a housing cover, a fluid inlet and a fluid outlet and a filter element being accommodated in the housing, the filter element comprising a center pipe having a longitudinal direction and being surrounded by a filter bellows, the filter bellows comprising an end cap at one or both of its end regions, the filter element further comprising a sealing structure, particularly a gasket, at the end cap, wherein a safety assembly is arranged inside the housing, having a blocking mode and an unblocking mode depending on an axial and/or rotational position of the filter element in the housing and being configured to provide access of the sealing structure of the filter element to a sealing area of the safety assembly in the unblocking mode and to block access of the sealing structure of the filter element to the sealing area of the safety assembly in the blocking mode when the sealing structure of the filter element is moved towards the sealing area; the safety assembly having a first section arranged at the housing and a second section arranged at the filter element, the first and second sections comprising at least one blocking element and at least one unblocking element configured to cooperate with the at least one blocking element, the at least one blocking element comprising an activation surface and the at least one unblocking element comprising a cam for pushing the activation surface in a radial direction when a contact between the cam and the activation surface is established.

Another object is achieved by a safety assembly for a filter system according to any one of the preceding claims, the filter system comprising a filter element and a housing, having a sealing area and having a blocking mode and an unblocking mode depending on an axial and/or rotational position of the filter element in the housing and being configured to provide access of a sealing structure of the filter element to a sealing area of the safety assembly in the unblocking mode and to block access of the sealing structure of the filter element to the sealing area in the blocking mode when the sealing structure of the filter element is moved towards the sealing area, having a first section arranged at the housing and a second section arranged at the filter element, the first and second sections comprising at least one blocking element and at least one unblocking element configured to cooperate with the at least one blocking element, the at least one blocking element comprising an activation surface and the at least one unblocking element comprising a cam for pushing the activation surface in a radial direction when a contact between the cam and the activation surface is established.

Another object of the disclosure, which is not part of the invention, is achieved by a filter element for a filter system according to any one of the claims 1 to 9, comprising a center pipe having a longitudinal direction and being surrounded by a filter bellows, the filter bellows comprising an end cap at one or both of its end regions, and comprising a section of a safety assembly with either at least one unblocking element or at least one blocking element configured to cooperate with either the at least one blocking element or the at least one unblocking element of a first section of the safety assembly, the filter element further comprising a sealing structure, particularly a gasket, on one of its end regions.

Favorable embodiments and advantages of the invention are apparent from the further claims, the description and the drawings.

In a first aspect of the invention a filter system is proposed, comprising a housing with a housing head and a housing cover, a fluid inlet and a fluid outlet and a filter element being accommodated in the housing, the filter element comprising a center pipe having a longitudinal direction and being surrounded by a filter bellows, the filter bellows comprising an end cap at one or both of its end regions, the filter element further comprising a sealing structure, particularly a gasket, at the end cap. A safety assembly is arranged inside the housing, having a blocking mode and an unblocking mode depending on an axial and/or rotational position of the filter element in the housing and being configured to provide access of the sealing structure of the filter element to a sealing area of the safety assembly in the unblocking mode and to block access of the sealing structure of the filter element to the sealing area of the safety assembly in the blocking mode when the sealing structure of the filter element is moved towards the sealing area. The safety assembly has a first section arranged at the housing and a second section arranged at the filter element, the first and second sections comprising at least one blocking element and at least one unblocking element configured to cooperate with the at least one blocking element. The at least one blocking element comprises an activation surface and the at least one unblocking element comprising a cam for pushing the activation surface in a radial direction when a contact between the cam and the activation surface is established.

The inventive filter system comprises a safety assembly for ensuring a correct and reliable mounting of the filter element to the housing of the filter system. The safety assembly comprises two sections where the first section is arranged at the housing and the second section is arranged at the filter element, preferably at a center pipe or a ring structure connected to the center pipe of the filter element. The first section is arranged at the housing cover or at the housing head of the filter system. Both sections are cooperating when mounting the filter element to the housing.

Before mounting of the filter element to the housing the safety assembly is in a blocking mode where access of a sealing structure of the filter element to a sealing area of the safety assembly is blocked by a blocking element. Connection of the sealing structure and the sealing area is needed for a proper sealing of a raw fluid region in the filter system against a filtered fluid region.

The sealing may favorably comprise a sealing surface circumferencing the blocking element for sealing a raw fluid region of the filter system against a filtered fluid region by interacting with the sealing structure of the filter element.

The access may be unblocked when a filter element with a corresponding unblocking element is mounted to the blocking element. The blocking element may be realized by a construction cage with a spring member, whereas the unblocking element may be realized by a cam arranged at the center pipe, the cam cooperating with the spring member in an appropriate manner to unblock the sealing area. For this purpose the cam may be arranged at the center pipe pointing radially inwards.

In a favorable embodiment the blocking element may be arranged at the first section in the housing of the filter system, whereas the unblocking element may be arranged at the second section of the safety assembly in the filter element. Yet, in another embodiment the blocking element may also be arranged at the second section in the filter element and the unblocking element may be arranged at the first section in the housing.

Favorably the safety assembly may also comprise facilities to fix the filter element to the safety assembly and thus to fix the filter element to the housing cover or housing head. This may be achieved by locking the center pipe of the filter element to the blocking element of the safety assembly. Due to another embodiment an end cap of the filter element may be locked by the blocking element thus fixing the filter element to the housing of the filter system.

A further advantage of the inventive filter system is that no positioning of the filter element is needed due to some self-positioning structure and guiding grooves of the blocking element of the safety assembly. These structures lead the filter element during mounting in a longitudinal direction by a guiding rotation into the correct position in the housing. Further the filter element is led to an end position where it is fixed by the safety assembly in a locked position.

The fluid inlet as well as the fluid outlet may be favorably arranged in the housing head.

According to a favorable embodiment of the filter system the blocking element may comprise a spring member comprising the activation surface and a radially protruding lip, wherein the lip is retractable from its blocking position by pushing the activation surface in a radial direction. The spring member may favorably realize the blocked mode where the lip is in protruded position and blocks an access to the sealing area of the safety assembly. By pushing the activation surface in a radially inward direction the lip may be pushed back too, thus switching to the unblocked mode where access of the sealing structure of the filter element to the sealing area may be granted.

The blocking element may favorably be connected to the housing head or housing cover of the filter system.

According to a favorable embodiment of the filter system the blocking element may comprise a positioning structure connected to a guiding groove which leads the unblocking element to the activation surface by a rotational movement when moving the filter element in the longitudinal direction towards the blocking element. A further advantage of the inventive filter system is that no positioning of the filter element is needed due to some self-positioning structure and guiding grooves of the blocking element of the safety assembly. These structures lead the filter element during mounting in a longitudinal direction by a guiding rotation into the correct position in the housing.

According to a favorable embodiment of the filter system the blocking element may comprise a locking structure wherein the filter element is locked to the blocking element when the cam is inserted into the locking structure by a rotational movement of the filter element after surpassing the activation surface by the cam in the longitudinal direction. Favorably the safety assembly may also comprise facilities to fix the filter element to the safety assembly and thus to fix the filter element to the housing cover or housing head. This may be achieved by locking the center pipe of the filter element to the blocking element of the safety assembly. Thus the filter element is led to an end position where it is fixed by the safety assembly in a locked position.

According to a favorable embodiment of the filter system the locking structure may be configured as two neighbored ribs on a circumference of the blocking element. The cam may be locked between the two ribs in an axial direction of the filter element. Thus a movement of the filter element along the longitudinal direction may favorably be inhibited.

According to a favorable embodiment of the filter system the filter element may be locked to the blocking element by the lip of the blocking element when the cam is moved to an end position by a rotational movement of the filter element after surpassing the activation surface by the cam in the longitudinal direction. Due to this further embodiment an end cap of the filter element may be locked by the blocking element thus fixing the filter element to the housing of the filter system. Thus a movement of the filter element along the longitudinal direction may also be inhibited.

According to a favorable embodiment of the filter system the lip may be overlapping a collar structure of the end cap when the cam is in its end position. By this way an axial movement of the filter element is inhibited because the end cap is locked by the protruded lip of the spring member in one axial direction whereas in the reverse direction the end cap may be blocked by an end plate of the blocking element itself.

According to a favorable embodiment of the filter system the unblocking element may comprise at least one cam at a ring element, which is arranged inside the center pipe, particularly inside a water separator, wherein the cam is pointing radially inwards. In this embodiment an auxiliary structure, the ring element, comprises the cam for interaction with the activation surface of the blocking element. This feature may provide additional freedom to foresee the unblocking element as an additional element which does not need to be fixed to the center pipe but may be mounted in a separate step.

According to a favorable embodiment of the filter system the ring element may be arranged inside the center pipe in a free rotatable manner, particularly in the water separator. The ring element may be inserted before welding of the end cap to the filter bellows. Mounting of the filter element is provided with additional freedom in a rotational position. The embodiment enables for a reliable and correct mounting of the filter element concerning access to the sealing area of the safety assembly.

According to another aspect of the invention a safety assembly for a filter system is proposed, the filter system comprising a filter element and a housing, having a sealing area and having a blocking mode and an unblocking mode depending on an axial and/or rotational position of the filter element in the housing and being configured to provide access of a sealing structure of the filter element to a sealing area of the safety assembly in the unblocking mode and to block access of the sealing structure of the filter element to the sealing area in the blocking mode when the sealing structure of the filter element is moved towards the sealing area. The safety assembly has a first section arranged at the housing and a second section arranged at the filter element, the first and second sections comprising at least one blocking element and at least one unblocking element configured to cooperate with the at least one blocking element. The at least one blocking element comprises an activation surface and the at least one unblocking element comprises a cam for pushing the activation surface in a radial direction when a contact between the cam and the activation surface is established.

The safety assembly may favorably ensure a correct and reliable mounting of the filter element to the housing of the filter system. The safety assembly comprises two sections where the first section is arranged at the housing and the second section is arranged at the filter element, preferably at a center pipe or a ring structure connected to the center pipe of the filter element. The first section is arranged at the housing cover or at the housing head of the filter system. Both sections are cooperating when mounting the filter element to the housing.

Before mounting of the filter element to the housing the safety assembly is in a blocking mode where access of a sealing structure of the filter element to a sealing area of the safety assembly is blocked by a blocking element. Connection of the sealing structure and the sealing area is needed for a proper sealing of a raw fluid region in the filter system against a filtered fluid region.

The access may be unblocked when a filter element with a corresponding unblocking element is mounted to the blocking element. The blocking element may be realized by a construction cage with a spring member, whereas the unblocking element may be realized by a cam arranged at the center pipe, the cam cooperating with the spring member in an appropriate manner to unblock the sealing area.

According to another aspect of the invention a filter element for a filter system is proposed, comprising a center pipe having a longitudinal direction and being surrounded by a filter bellows, the filter bellows comprising an end cap at one or both of its end regions, and comprising a section of a safety assembly with either at least one unblocking element or at least one blocking element configured to cooperate with either the at least one blocking element or the at least one unblocking element of a first section of the safety assembly. The filter element further comprises a sealing structure, particularly a gasket, on one of its end regions.

Before mounting of the filter element to the housing of the filter system the safety assembly may be in a blocking mode where access of a sealing structure of the filter element to a sealing area of the safety assembly is blocked by a blocking element. Connection of the sealing structure and the sealing area is needed for a proper sealing of a raw fluid region in the filter system against a filtered fluid region.

The access may be unblocked when the filter element with a corresponding unblocking element is mounted to the blocking element. The blocking element may be realized by a construction cage with a spring member, whereas the unblocking element may be realized by a cam arranged at the center pipe, the cam cooperating with the spring member in an appropriate manner to unblock the sealing area.

Favorably the filter element may also be fixed to the safety assembly and thus to the housing cover or housing head of the filter system. This may be achieved by locking the center pipe of the filter element to the blocking element of the safety assembly. Due to another embodiment an end cap of the filter element may be locked by the blocking element thus fixing the filter element to the housing of the filter system.

According to a favorable embodiment of the filter element the at least one blocking element may comprise an activation surface and the at least one unblocking element comprises a cam for pushing the activation surface in a radial direction when a contact between the cam and the activation surface is established.

The blocking element in the form of a spring member may favorably realize the blocked mode where a lip is in protruded position and blocks an access to the sealing area of the safety assembly. By pushing the activation surface in a radially inward direction the lip may be pushed back too, thus switching to the unblocked mode where access of the sealing structure of the filter element to the sealing area may be granted.

According to a favorable embodiment of the filter element the unblocking element may comprise at least one cam arranged at the center pipe pointing radially inwards. Thus by moving the filter element in the longitudinal direction the cam at the center pipe gets into contact with the activation surface of the blocking member which is positioned inside the center pipe. The cam pushes the activation surface radially inwards and unblocks the access to the sealing area of the blocking element of the safety assembly.

According to a favorable embodiment of the filter element the unblocking element may comprise at least one cam at a ring element, which is arranged inside the center pipe, wherein the cam is pointing radially inwards, in particular, wherein the ring element is arranged in a free rotatable manner inside the center pipe. In this embodiment an auxiliary structure, the ring element, comprises the cam for interaction with the activation surface of the blocking element. This feature may provide additional freedom to foresee the unblocking element as an additional element which does not need to be fixed to the center pipe but may be mounted in a separate step. The ring element may be inserted before welding of the end cap to the filter bellows. Mounting of the filter element is provided with additional freedom in a rotational position. The embodiment enables for a reliable and correct mounting of the filter element concerning access to the sealing area of the safety assembly.

According to a favorable embodiment of the filter element the blocking element may comprise a spring member with the activation surface and a radially protruding lip, wherein the lip is retractable from its blocking position by pushing the activation surface in a radial direction. The spring member may favorably realize the blocked mode where the lip is in protruded position and blocks an access to the sealing area of the safety assembly. By pushing the activation surface in a radially inward direction the lip may be pushed back too, thus switching to the unblocked mode where access of the sealing structure of the filter element to the sealing area may be granted.

### Brief Description of the Drawings

The present invention together with the above-mentioned and other objects and advantages may best be understood from the following detailed description of the embodiments, but not restricted to the embodiments, wherein is shown in:
- Figure 1: a cut view through a filter system with a safety assembly and a filter element according to an embodiment of the invention;
- Figure 2: a cut view through the filter element of the filter system of Figure 1 connected to the blocking element;
- Figure 3: a perspective view of a first section of the safety assembly of Figure 1;
- Figure 4: a cut perspective view of the first section of the safety assembly of Figure 1;
- Figure 5: a cut perspective view of the filter element of Figure 1;
- Figures 6-12: successive steps of an interaction of the sections of the safety element during mounting of the filter element in perspective and cut views;
- Figure 13: a perspective view of first section of a safety assembly according to a second embodiment of the invention;
- Figure 14: a cut perspective view of the first section of the safety assembly of Figure 13;
- Figure 15: a cut perspective view of a filter element according to the second embodiment of the invention;
- Figures 16-22: successive steps of the interaction of the sections of the safety element during mounting of the filter element in perspective and cut views according to the second embodiment of the invention;
- Figure 23: a cut view through a filter system with a safety assembly and a filter element according to a third embodiment of the invention;
- Figure 24: a cut view through the filter element of the filter system of Figure 23 connected to the blocking element;
- Figure 25: a perspective view of a first section of a safety assembly according to the third embodiment of the invention;
- Figure 26: a cut perspective view of the first section of the safety assembly of Figure 25;
- Figure 27: a cut perspective view of the filter element according to the third embodiment of the invention;
- Figure 28: a perspective view of a ring element according to the third embodiment of the invention; and
- Figures 29-33: successive steps of the interaction of the sections of the safety element during mounting of the filter element in perspective and cut views according to the third embodiment of the invention.

### Detailed Description of the Drawings

In the drawings, like elements are referred to with equal reference numerals. The drawings are merely schematic representations, not intended to portray specific parameters of the invention. Moreover, the drawings are intended to depict only typical embodiments of the invention and therefore should not be considered as limiting the scope of the invention.

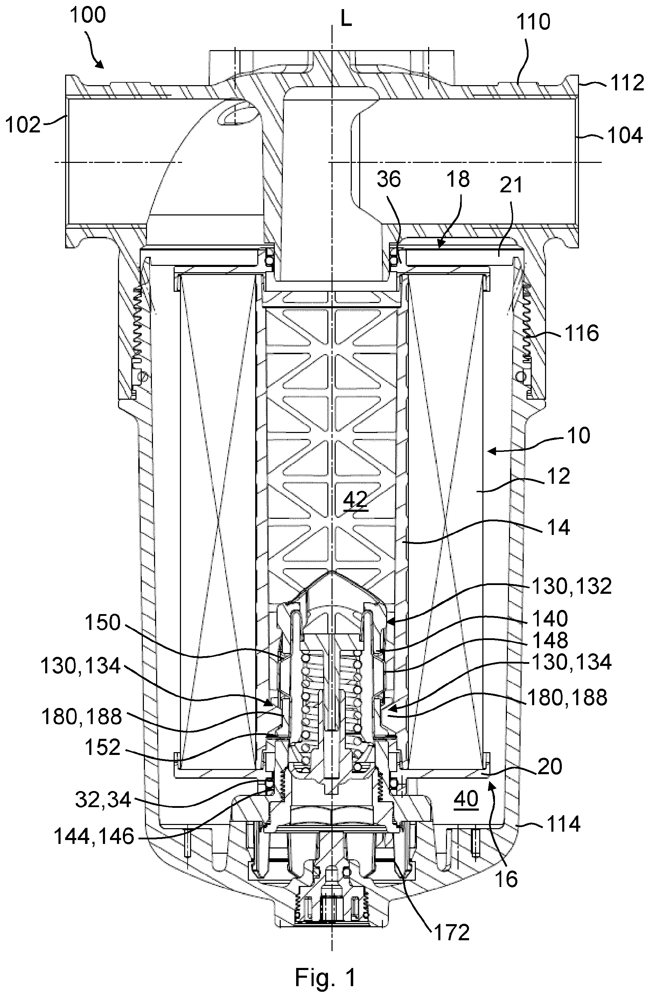

Figure 1 depicts a cut view through a filter system 100 with a safety assembly 130 and a filter element 10 according to an embodiment of the invention.

The filter system 100 comprises a housing 110 with a housing head 112 and a housing cover 114, a fluid inlet 102 and a fluid outlet 104 and a filter element 10 being accommodated in the housing 110. The filter system 100 may be used for filtering fluids, particularly for motor oil. The filter element 10 is mounted to the housing cover 114 and then the housing cover 114 with the filter element 10 is mounted to the housing head 112 by inserting it into the housing head 112. The housing 110 is closed by tightening the screw connection 116.

The filter element 10 separates a raw fluid region 40 inside the housing 110 from a filtered fluid region 42 by being sealed on the first end cap with the gasket 34 against the sealing surface 146 of the sealing area 144 of the blocking element 140 and on the other end cap 21 with the gasket 36 against the fluid outlet 104 in the housing head 112.

Fluid to be filtered enters the housing 110 of the filter system 100 through the fluid inlet 102, passes the filter bellows 12 from the raw fluid region 40 on the outside of the filter element 10 to the filtered fluid region 42 on the inside of the filter element 10. The filtered fluid exits the housing 110 through the fluid outlet 104. Fluid inlet 102 and fluid outlet 104 are both arranged in the housing head 112.

For changing the filter element 10 due to maintenance action the housing cover 114 is unscrewed and dismounted from the housing head 112 together with the filter element 10.

The filter element 10 comprises a center pipe 14 having a longitudinal direction L and being surrounded by a filter bellows 12. The filter bellows 12 comprises end caps 20, 21 at both of its end regions 16, 18. The filter element 10 further comprises a sealing structure 32 with a gasket 34 at the end cap 20 for sealing against a safety assembly 130, whereas a second gasket 36 is provided at the other end cap 21 for sealing against the fluid outlet 104 of the housing head 112.

The safety assembly 130 is arranged inside the housing 110, and exhibits a blocking mode and an unblocking mode depending on an axial and/or rotational position of the filter element 10 in the housing 110. The safety assembly 130 is configured to provide access of the sealing structure 32 of the filter element 10 to a sealing area 144 of the safety assembly 130 in the unblocking mode and to block access of the sealing structure 32 of the filter element 10 to the sealing area 144 of the safety assembly 130 in the blocking mode when the sealing structure 32 of the filter element 100 is moved towards the sealing area 144.

The safety assembly 130 has a first section 132 arranged at the housing 110 and a second section 134 arranged at the filter element 10. The first section 132 comprises a blocking element 140. The second section 134 comprises an unblocking element 180 configured to cooperate with the blocking element 140. The blocking element 140 comprises an activation surface 148. The unblocking element 180 comprises a cam 188 for pushing the activation surface 148 in a radial direction when a contact between the cam 188 and the activation surface 148 is established.

The blocking element 140 comprises a spring member 150 comprising the activation surface 148 and a radially protruding lip 152, wherein the lip 152 is retractable from its blocking position by pushing the activation surface 148 in a radial direction. The blocking element 140 is fixed to the housing cover 114 by mounting members 172 which are extended in the longitudinal direction L and arranged in a circumference at a radial distance from the axis L.

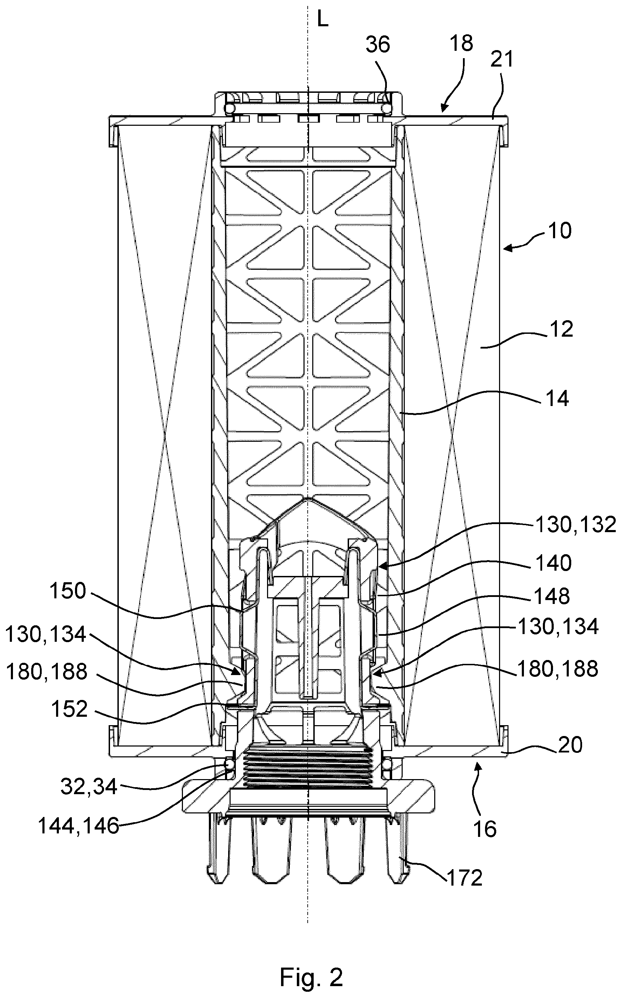

Figure 2 depicts a cut view through the filter element 10 of the filter system 100 connected to the blocking element 140 as the first section 132 of the safety assembly 130.

The safety assembly 130 has the sealing area 144 and has a blocking mode and an unblocking mode depending on an axial and/or rotational position of the filter element 10 in the housing 110. The safety assembly 130 is configured to provide access of the sealing structure 32 of the filter element 10 to the sealing area 144 of the safety assembly 130 in the unblocking mode and to block access of the sealing structure 32 of the filter element 10 to the sealing area 144 in the blocking mode when the sealing structure 32 of the filter element 100 is moved towards the sealing area 144.

The safety assembly 130 has the first section 132 arranged at the housing 110 of the filter system and the second section 134 arranged at the filter element 10. The first section 132 comprises the blocking element 140 and the second section 134 comprises at least one unblocking element 180 configured to cooperate with the blocking element 140.

The blocking element 140 comprises the activation surface 148, whereas the unblocking element 180 comprises a cam 188 for pushing the activation surface 148 in a radial direction when a contact between the cam 188 and the activation surface 148 is established.

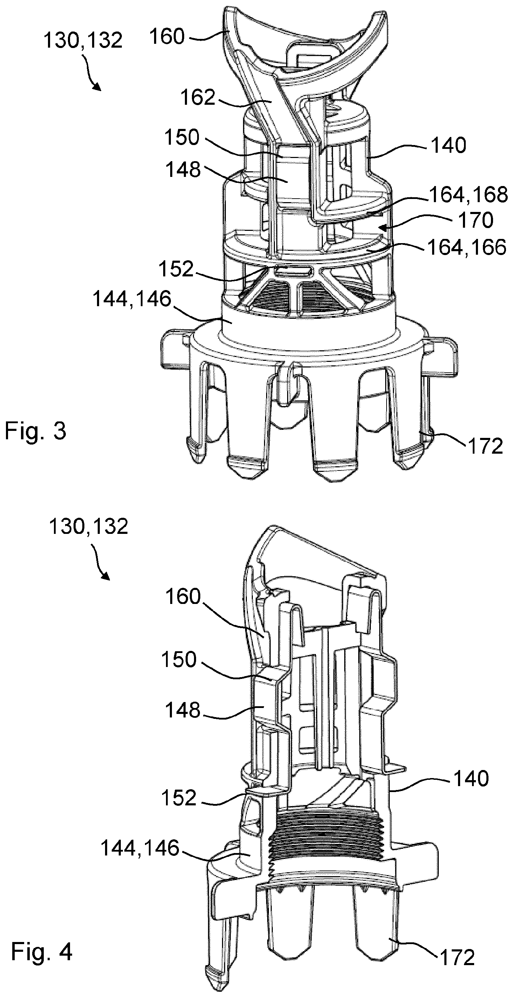

In Figure 3 a perspective view of the first section 132 of the safety assembly 130 is depicted, whereas in Figure 4 a cut perspective view of the first section 132 of the safety assembly 130 is shown.

The blocking element 140 as part of the first section 132 comprises two spring members 150 comprising the activation surface 148 and a radially protruding lip 152. The lip 152 is retractable from its blocking position by pushing the activation surface 148 in a radial direction. The spring members 150 are arranged opposite to each other in the blocking element 140.

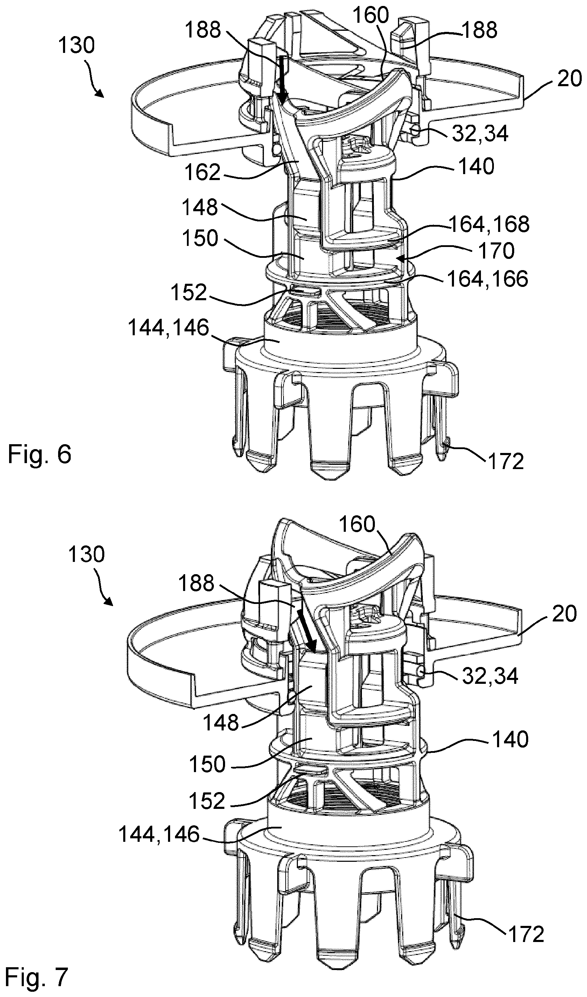

The blocking element 140 comprises a positioning structure 160 connected to a guiding groove 162 which leads the unblocking element 180 to the activation surface 148 by a rotational movement when moving the filter element 10 in the longitudinal direction L towards the blocking element 140. The interaction of the safety assembly 130 is shown in details in Figures 6 to 12.

The blocking element 140 further comprises a locking structure 164 wherein the filter element 10 is locked to the blocking element 140 when the cam 188 is inserted into the locking structure 164 by a rotational movement of the filter element 10 after surpassing the activation surface 148 by the cam 188 in the longitudinal direction L. The locking structure 164 is configured as two neighbored ribs 166, 168 on a circumference of the blocking element 140.

The filter element 10 is locked to the blocking element 140 by the protruded lip 152 of the blocking element 140 when the cam 188 is moved to an end position 170 by a rotational movement of the filter element 10 after surpassing the activation surface 148 by the cam 188 in the longitudinal direction L

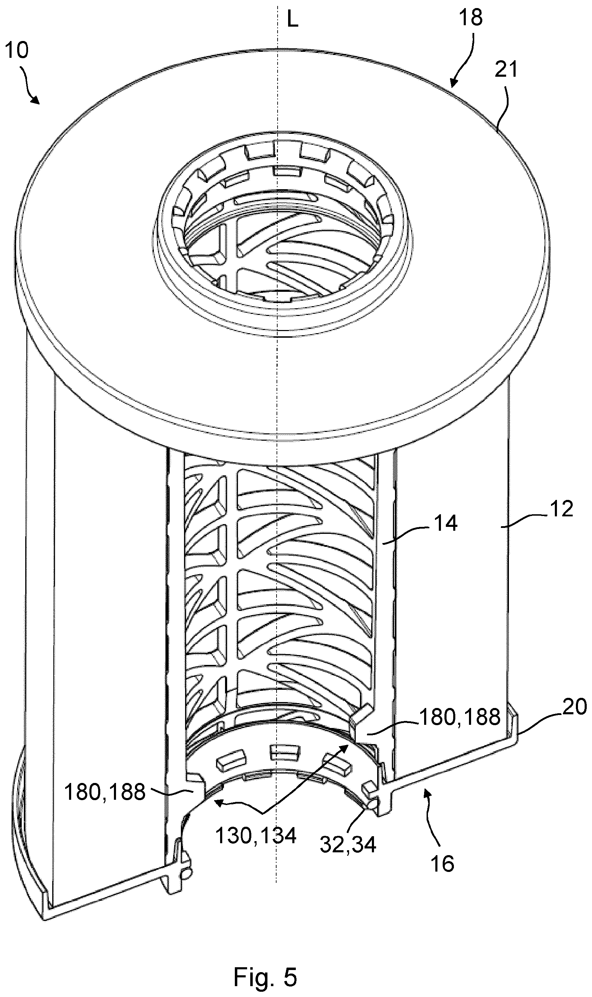

Figure 5 depicts a cut perspective view of the filter element 10.

The filter element 10 comprises the center pipe 14 with the longitudinal direction L which is surrounded by the filter bellows 12. The filter bellows 12 comprises end caps 20, 21 at its end regions 16, 18. The filter element 10 further comprises the second section 134 of the safety assembly 130 with two unblocking elements 180 which are opposite to each other arranged and configured to cooperate with the blocking elements 140 of the first section 132 of the safety assembly 130.

The filter element 10 further comprises a sealing structure 32 with a gasket 34 on its end region 16.

In Figures 6 to 12 successive steps of the interaction of the sections 132, 134 of the safety element 130 during mounting of the filter element 10 are depicted in perspective and cut views. The filter element 10 is only shown with its end cap 20 and the two opposing cams 188 in order to get a free view on the interaction behavior of the different elements.

The process starts in Figure 6 where the cam 188 is led via the positioning structure 160 to the guiding grooves 162 of the blocking element 140. The spring members 150 is in its starting position where the lip 152 is protruded and blocks the access of the sealing structure 32 at the end cap 20 to the sealing area 144 of the blocking element 140.

The movement of the cam 188 is indicated by black arrows.

By moving the filter element 10 in the longitudinal direction L to the blocking element 140 the cam 188 is guided in the guiding groove 162 to the activation surface 148 of the spring member 150, as shown in Figure 7.

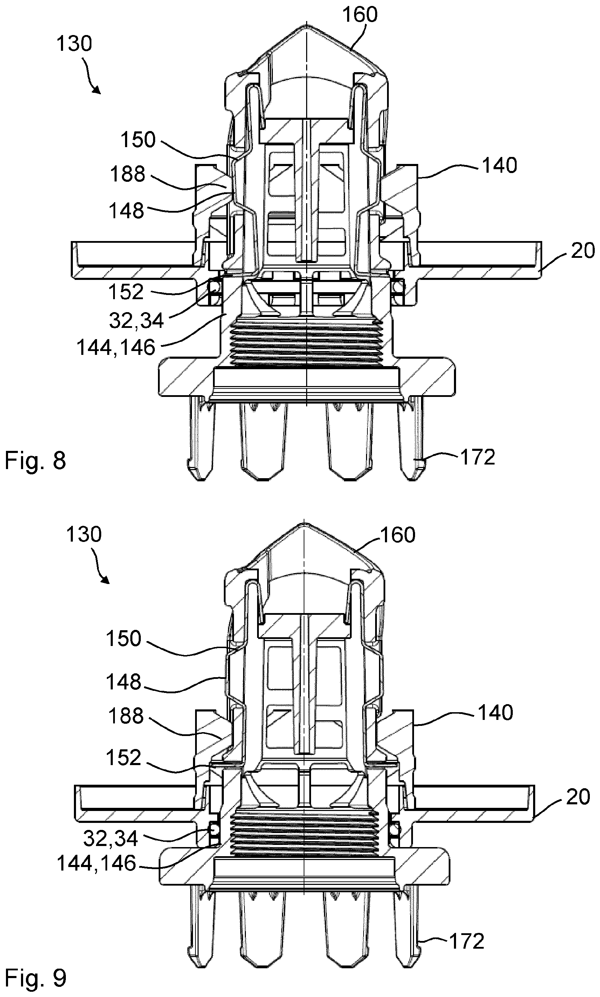

In Figure 8 the cam 188 pushes the activation surface 148 radially inwards such that the lip 152 is radially withdrawn. Thus the safety assembly 130 is in the unblocking mode. In this mode the sealing structure 32 of the end cap 20 with the gasket 34 may glide to the sealing surface 146 of the sealing area 144 of the blocking element 140.

In Figure 9 the cam 188 has surpassed the activation surface 148. The end cap 20 is in its final position where the gasket 34 of the sealing structure 32 is pressed tightly at the sealing surface 146 of the sealing area 144.

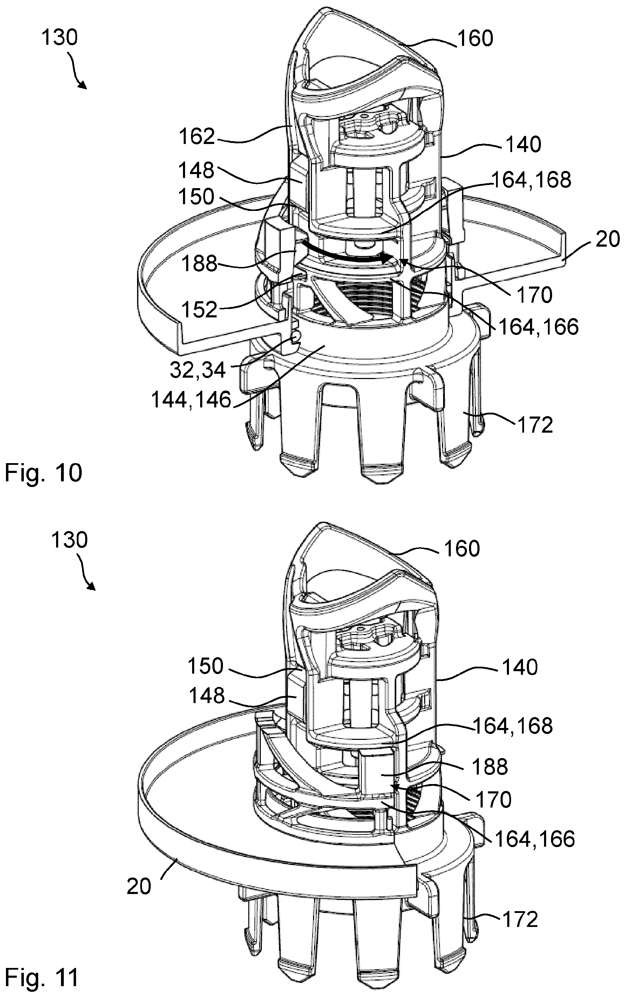

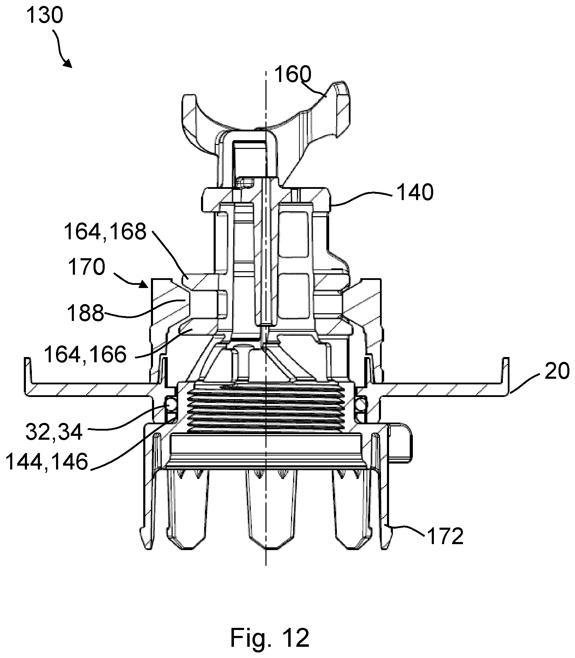

Now the filter element 10 may be rotated, as indicated in Figure 10, thus moving the cam 188 to the end position 170 between the neighboring rips 166, 168. In this position, shown in Figures 11 and 12, the filter element 10 is locked in this locking structure 164 with the cams 188 between the rips 166, 168.

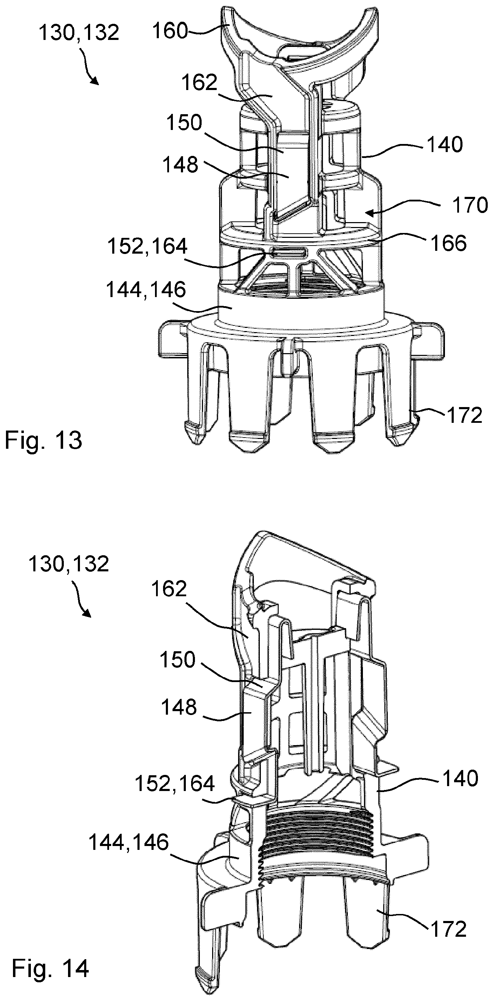

Figure 13 depicts a perspective view of a first section 132 of a safety assembly 130 according to a second embodiment of the invention. In Figure 14 a cut perspective view of the first section 132 is shown.

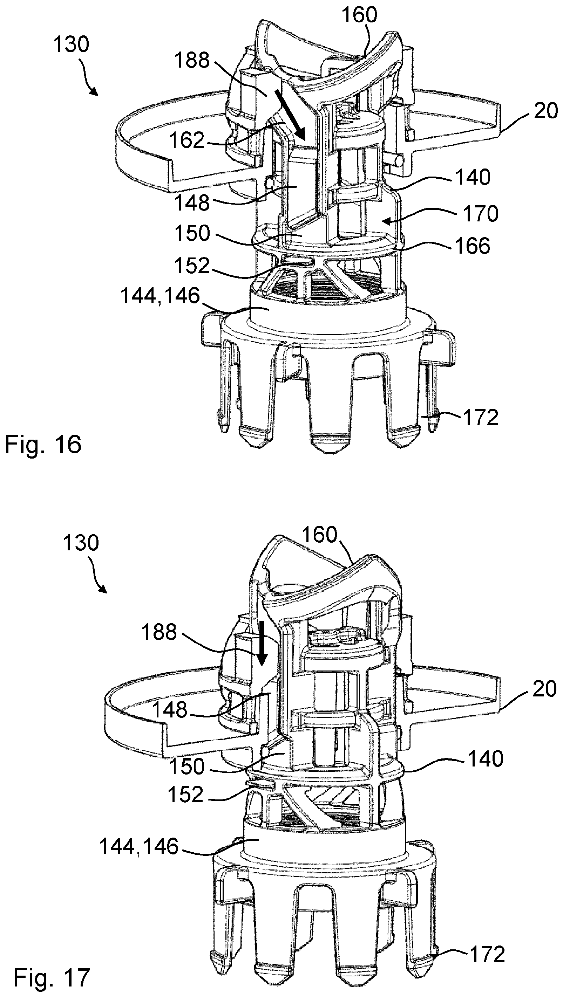

In this embodiment the activation surface 148 of the spring member 150 exhibits a different shape so that the activation surface 148 is still in contact with the cam 188 when the cam 188 is at its end position at the rib 166. The effect of this behavior on the interaction of the safety assembly 130 is shown in Figures 16 to 22.

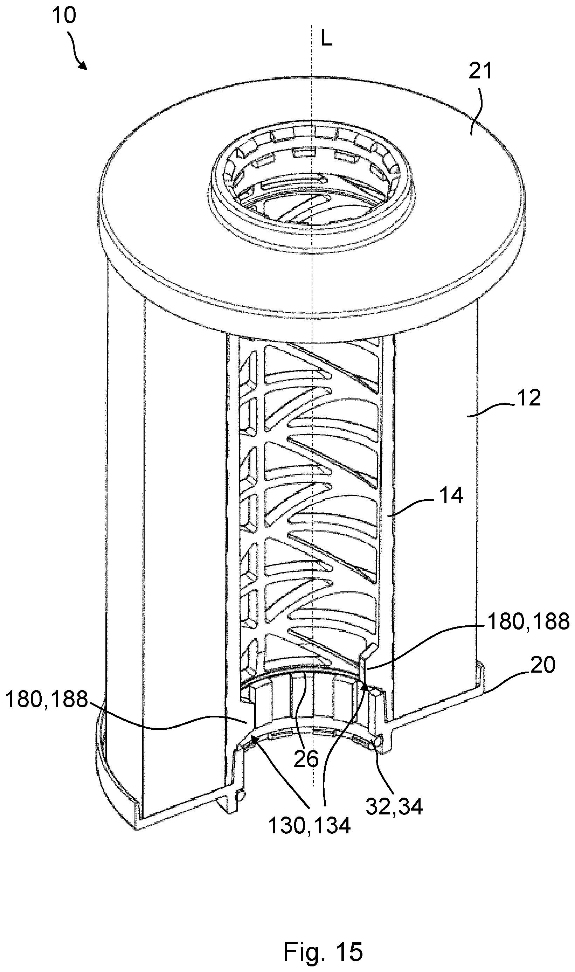

Figure 15 depicts a cut perspective view of a filter element 10 according to the second embodiment of the invention.

The principal structure is the same as with the first embodiment shown in Figure 5. The main difference is that the end cap 20 comprises a collar structure 26 extending in the longitudinal direction L connected to the sealing structure 32.

In Figures 16 to 22 successive steps of the interaction of the sections 132, 134 of the safety element 130 during mounting of the filter element 10 according to the second embodiment of the invention are depicted in perspective and cut views.

In Figures 16 and 17 the guiding process of the cam 188 in the guiding groove 162 towards the interaction surface 148 of the spring element 150 is shown, which resembles the process for the first embodiment, shown in Figures 6 and 7. A major difference of the blocking element 140 is that it only exhibits one rib 166 and is missing the second rib 168 of the first embodiment.

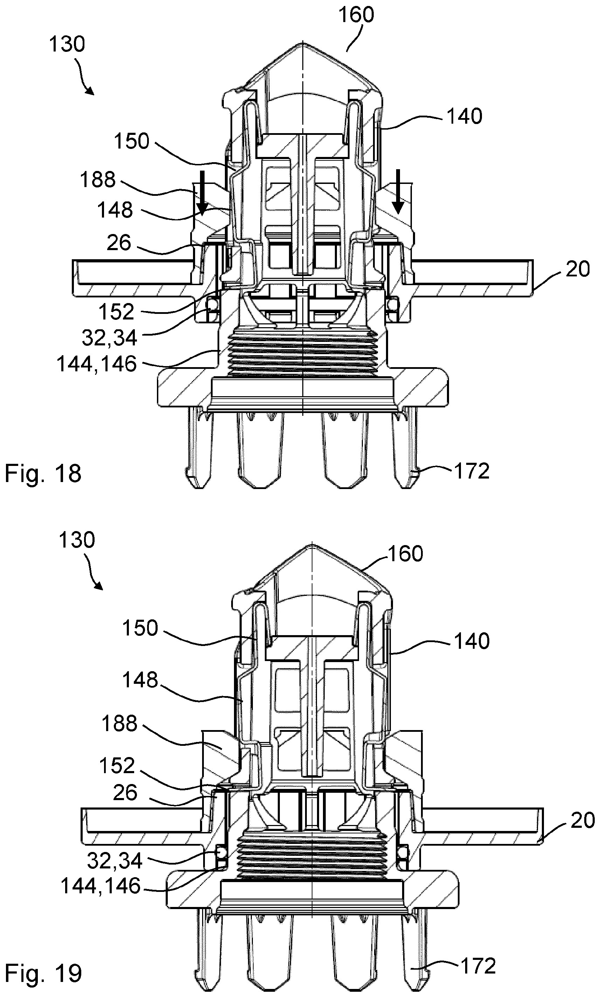

In Figure 18 the cam 188 pushes the activation surface 148 radially inwards such that the lip 152 is radially withdrawn. Thus the safety assembly 130 is in the unblocking mode. In this mode the sealing structure 32 of the end cap 20 with the gasket 34 may glide to the sealing surface 146 of the sealing area 144 of the blocking element 140.

In Figure 19 the cam 188 has partly surpassed the activation surface 148, but part of the cam 188 is still pushing the activation surface 148 inwards because it hat a longer extension along the longitudinal direction L that in the first embodiment. Thus the lip 152 is still recessed radially inwards, despite the cam 188 has reached the rib 166 of the blocking element 140.

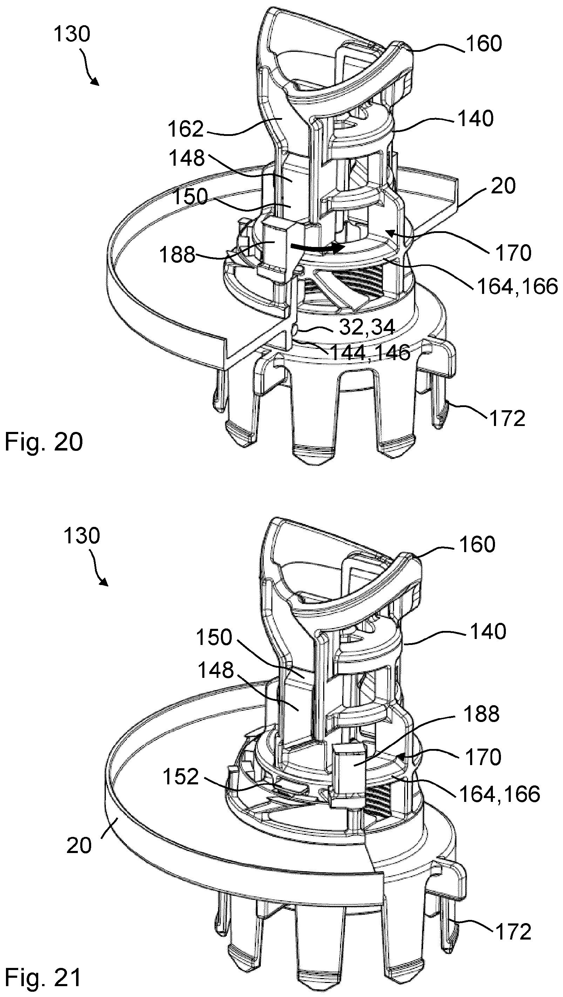

In Figure 20 it is depicted, indicated by the black arrow, that now the filter element 10 is rotated to the end position 170. The cam 188 is shown in Figure 21 on part of the way to the end position. Now the activation surface 148 no longer is pushed inwards so the lip 152 is protruded again.

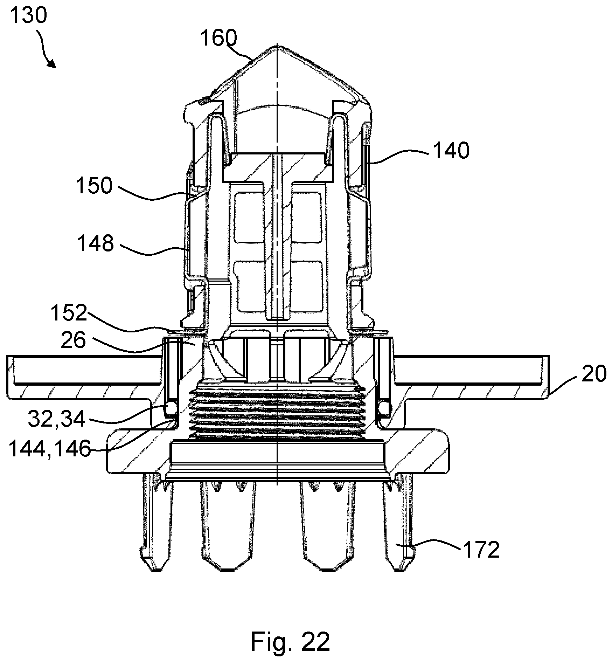

This process leads to the situation, depicted in Figure 22, where the lip 152 is overlapping the collar structure 26 of the end cap 20 when the cam 188 is in its end position 170. Thus the filter element 10 is locked in its axial movement along the longitudinal direction L. The end cap 20 is in its final position where the gasket 34 of the sealing structure 32 is pressed tightly at the sealing surface 146 of the sealing area 144.

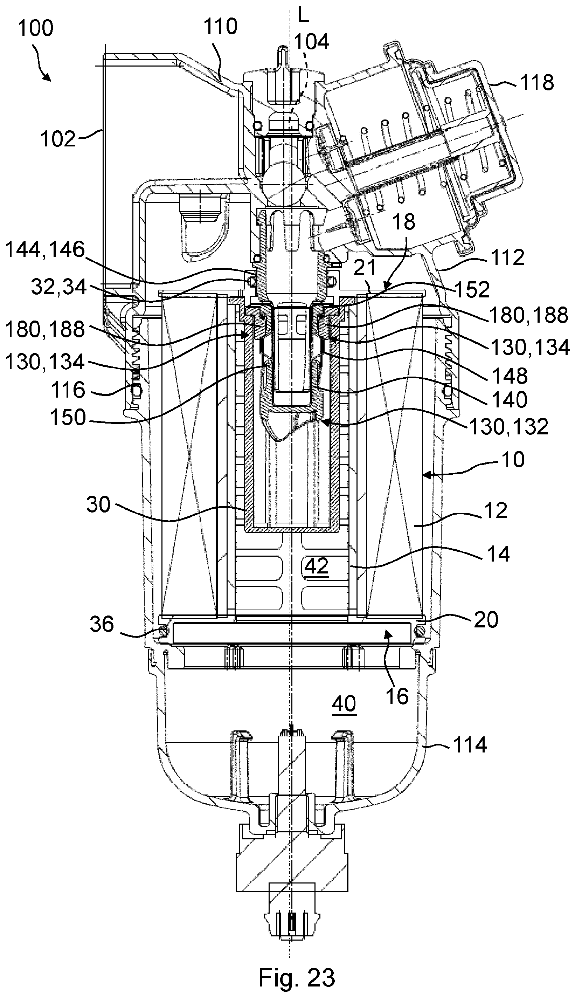

Figure 23 depicts a cut view through a filter system 100 with a safety assembly 130 and a filter element 10 according to a third embodiment of the invention. The filter system 100 may be used for filtering fluids, particularly for fuel of internal combustion engines.

The filter system 100 comprises a housing 110 with a housing head 112 and a housing cover 114 which are fit together by a screw connection 116. A fluid inlet 102 is arranged in the housing head 112 as well as a fluid outlet 114, which is not visible in the Figure. Also a hand pump 118 is arranged in the filter head 112 for conveying fuel after maintenance action.

The first section 132 of a safety assembly 130 with a blocking element 140 in this embodiment is connected to the housing head 112. So the filter element 10 is mounted to the housing head 112 before closing the housing 110 by screwing the housing cover 114 to the housing head 112 by tightening the screw connection 116 of the housing 110. The filter element 10 is sealed to the housing cover 114 by a gasket 36 on a radial circumference of the end cap 20 on the lower end region 16.

On the other end region 18 the filter element 10 comprises a sealing structure 32 with a gasket 34 at the end cap 21 to be sealed against a sealing surface 146 of a sealing area 144 of a blocking element 140 like for the other embodiments.

The unblocking element 180 of the second section of the safety assembly 130 in the filter element 10 comprises at least one cam 188 at a ring element 28, which is arranged inside the center pipe 14, and in the embodiment shown particularly inside a water separator 30. The cam 188 is pointing radially inwards. The ring element 28 is arranged inside the water separator 30 in a free rotatable manner.

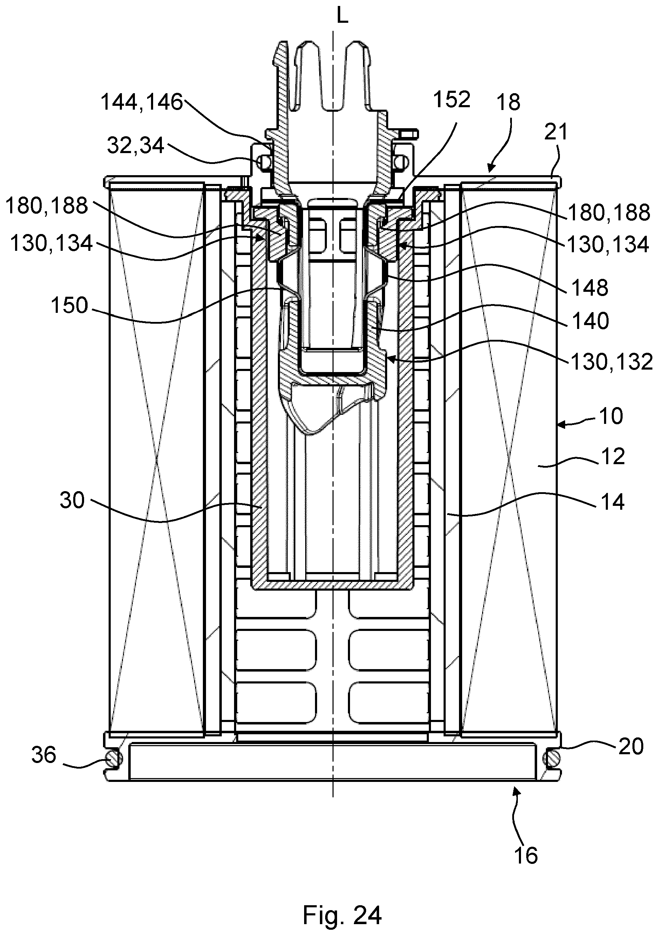

Figure 24 depicts a cut view through the filter element 10 of the filter system 100 of Figure 23 connected to the blocking element 140.

The unblocking element 180 comprises two opposite arranged cams 188 at the ring element 28, which is arranged inside the center pipe 14. The cam 188 is pointing radially inwards. The ring element 28 is arranged in a free rotatable manner inside the center pipe 14.

The ring element 28 may be mounted to the filter element 10 after inserting the water separator 30 into the center pipe 14 and before closing the filter element 10 with the end cap 21. After mounting the end cap 21 to the filter bellows 12 the ring element 28 may be fixed in the longitudinal direction L of the filter element 10, but remain freely rotatable.

As can be seen in the Figure the filter element 10 is sealed against the blocking element 140 but is not fixed in the longitudinal direction L. The filter element 10 may still be removed by moving the filter element 10 from the blocking element 140 in the longitudinal direction L.

The blocking element 140 comprises an activation surface 148 and the at least one unblocking element 180 comprises a cam 188 for pushing the activation surface 148 in a radial direction when a contact between the cam 188 and the activation surface 148 is established.

The unblocking element 180 comprises at least one cam 188 arranged at the center pipe 14 pointing radially inwards.

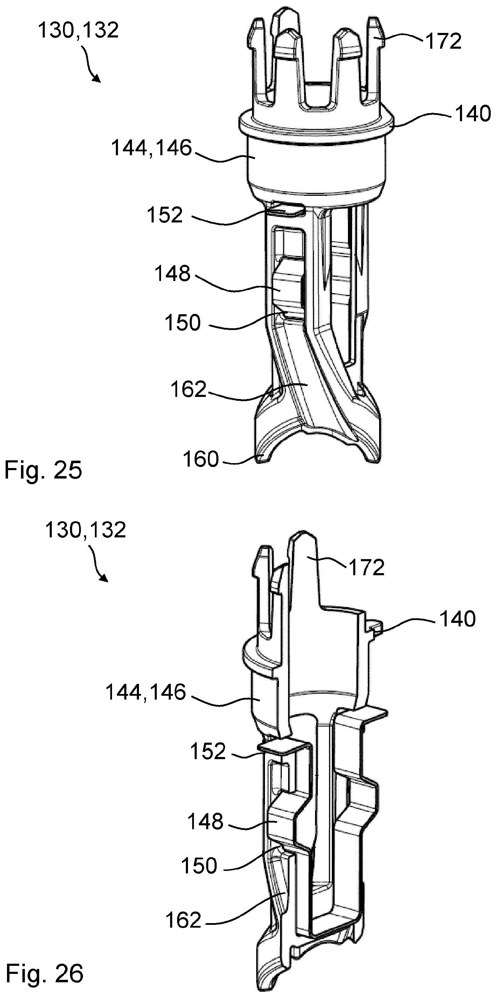

In Figure 25 a perspective view of the first section 132 of the safety assembly 130 according to the third embodiment of the invention is shown, whereas in Figure 26 a cut perspective view of the first section 132 is depicted.

The blocking element 140 comprises two spring members 150 with the activation surface 148 and a radially protruding lip 152, wherein the lip 152 is retractable from its blocking position by pushing the activation surface 148 in a radial direction. So the structure of the blocking element 140 is very similar to the other embodiments. A main difference is that the guiding groove 162 is not exhibiting a bending shape but is directed straight in the longitudinal direction L. Thus by mounting the filter element 10 to the blocking element 140 there is no rotational movement involved.

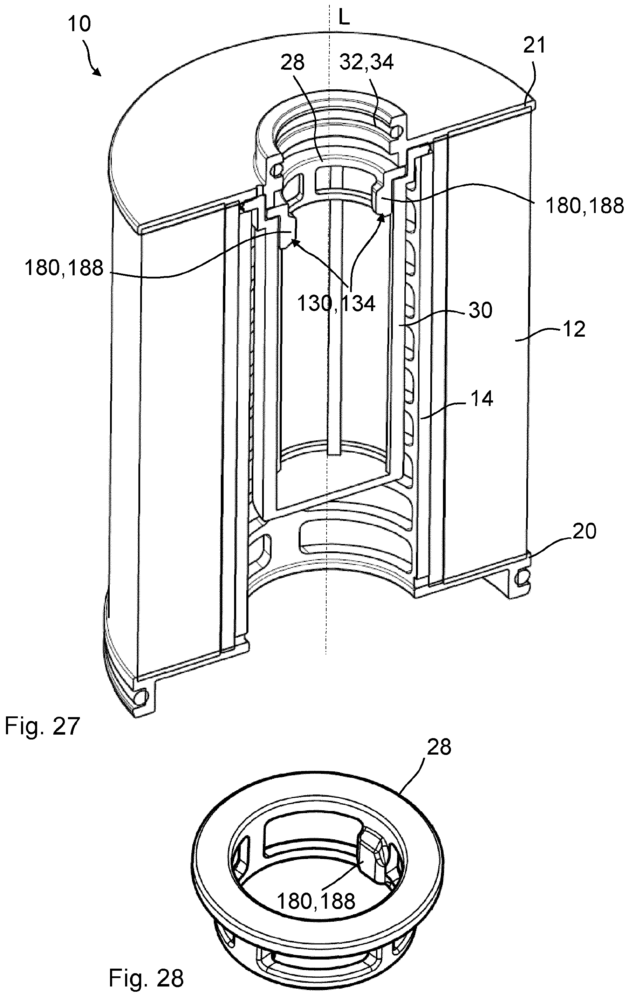

Figure 27 depicts a cut perspective view of the filter element 10 according to the third embodiment of the invention. Mounting of the water separator 30 as well as the ring element 28 with the two opposed arranged cams 188 inside the water separator 30 may be seen in more details. Figure 28 depicts a perspective view of the ring element 28 separately.

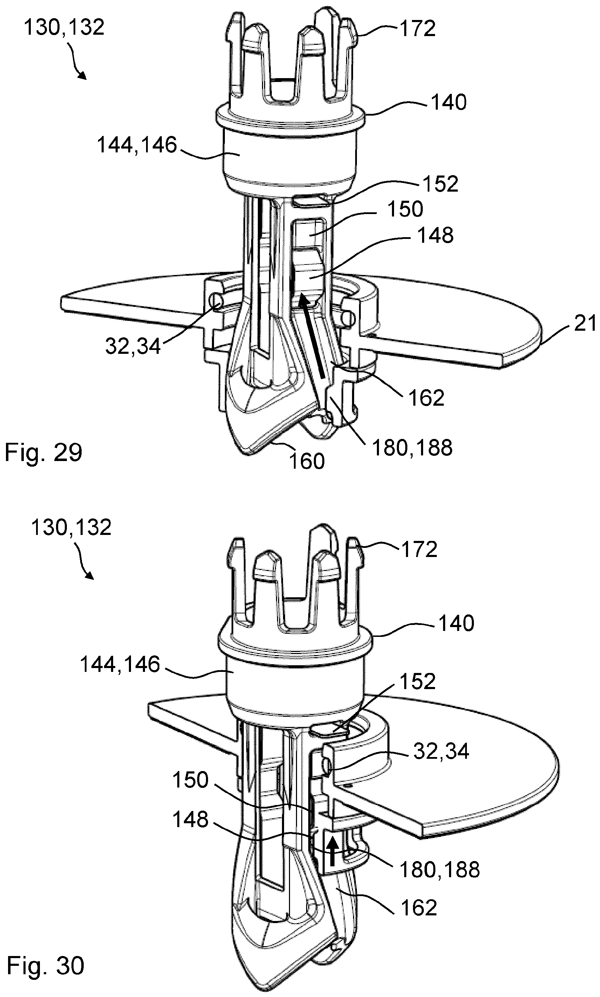

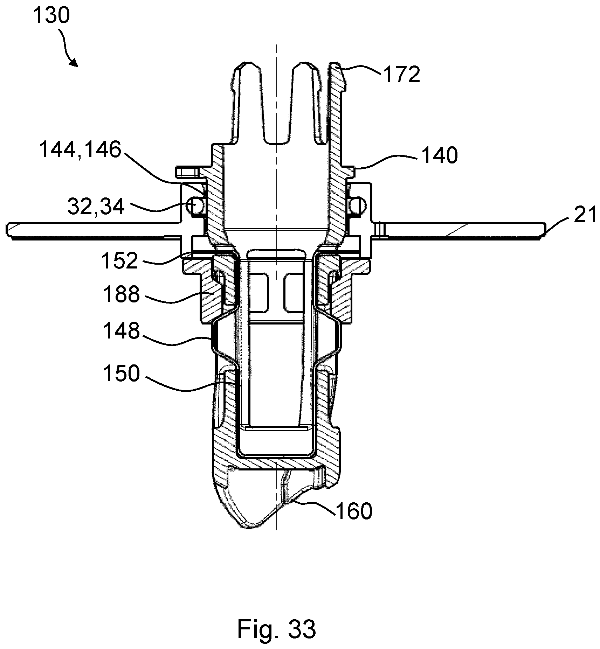

In the Figures 29 to 33 successive steps of the interaction of the sections 132, 134 of the safety element 130 during mounting of the filter element 10 according to the third embodiment of the invention is depicted in perspective and cut views.

Figures 29 and 30 depict the insertion process of the filter element 10 by moving the cam 188 of the unblocking element 180 along the guiding groove 162, indicated by the black arrows.

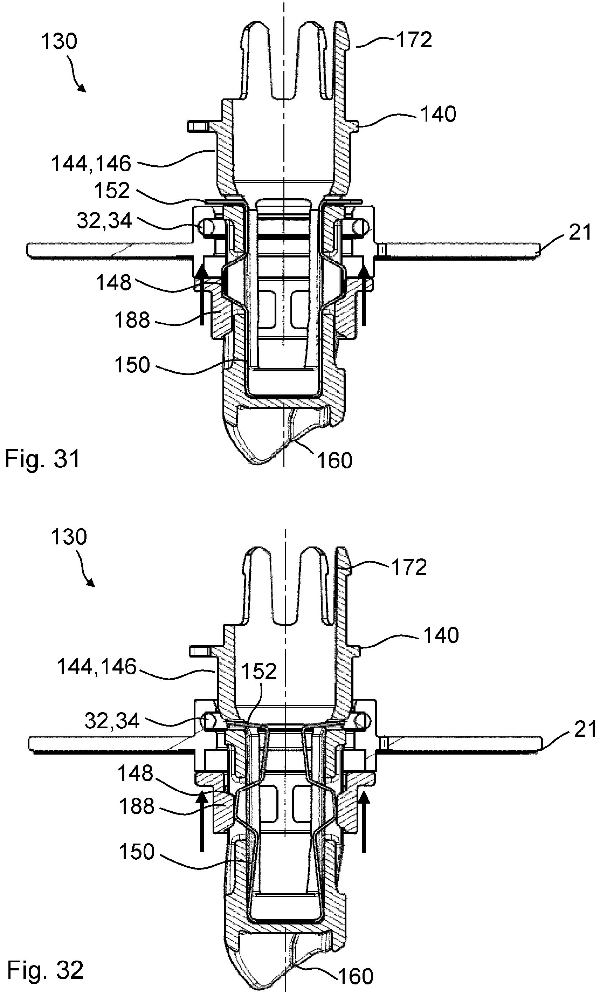

In the cut view in Figure 31 the cam 188 is just before activating the activating surface 148 of the spring member 150. Thus the access of the sealing structure 32 to the sealing area 144 of the blocking element 140 is still in the blocked mode.

In Figure 32 the activation surface 148 is pushed radially inwards by the cam 188, recessing the lip 152, such that the safety assembly 130 is in the unblocked mode and access of the sealing structure 32 of the filter element 10 to the sealing area 144 of the blocking element 140 is open.

Thus the gasket 34 of the sealing structure 32 may glide over the sealing surface 146 of the sealing area 144 until there is a tight sealing between the end cap 21 and the blocking element 140.

The cam 188 has surpassed the activation area 148 such that the lip 152 is protruded again. For demounting the filter element 10 it has just to be pulled in the other direction to open access again by activating the activation surface 148 by the cam 188.

### Reference Numerals

- 10: filter element
- 12: filter bellows
- 14: center pipe
- 16: end region
- 18: end region
- 20: end cap
- 21: end cap
- 26: collar structure
- 28: ring element
- 30: water separator
- 32: sealing structure
- 34: gasket
- 36: gasket
- 40: raw fluid region
- 42: filtered fluid region
- 100: filter system
- 102: fluid inlet
- 104: fluid outlet
- 110: housing
- 112: housing head
- 114: housing cover
- 116: screw connection
- 118: hand pump
- 130: safety assembly
- 132: first section
- 134: second section
- 140: blocking element
- 144: sealing area
- 146: sealing surface
- 148: activation surface
- 150: spring member
- 152: lip
- 160: positioning structure
- 162: guiding groove
- 164: locking structure
- 166: rib
- 168: rib
- 170: end position
- 172: mounting member
- 180: unblocking element
- 188: cam

## Claims

1. A filter system (100) comprising a housing (110) with a housing head (112) and a housing cover (114), a fluid inlet (102) through which a fluid to be filtered can enter the housing (110) of the filter system (100) and a fluid outlet (104) through which a filtered fluid can exit and a filter element (10) being accommodated in the housing (110),
the filter element (10) comprising a center pipe (14) having a longitudinal direction (L) and being surrounded by a filter bellows (12), the filter bellows (12) comprising an end cap (20, 21) at one or both of its end regions (16, 18), the filter element (10) further comprising a sealing structure (32), particularly a gasket (34, 36), at the end cap (20, 21),
wherein a safety assembly (130) is arranged inside the housing (110), having a blocking mode and an unblocking mode depending on an axial and/or rotational position of the filter element (10) in the housing (110) and being configured to provide access of the sealing structure (32) of the filter element (10) to a sealing area (144) of the safety assembly (130) in the unblocking mode and to block access of the sealing structure (32) of the filter element (10) to the sealing area (144) of the safety assembly (130) in the blocking mode when the sealing structure (32) of the filter element (100) is moved towards the sealing area (144);
the safety assembly (130) having a first section (132) arranged at the housing (110) and a second section (134) arranged at the filter element (10), the first and second sections (132, 134) comprising at least one blocking element (140) and at least one unblocking element (180) configured to cooperate with the at least one blocking element (140),
the at least one blocking element (140) comprising an activation surface (148) and the at least one unblocking element (180) comprising a cam (188) for pushing the activation surface (148) in a radial direction when a contact between the cam (188) and the activation surface (148) is established such that the cam (188) can surpass the activation surface (148), **characterized in that** the blocking element (140) comprises a positioning structure (160) connected to a guiding groove (162) which leads the unblocking element (180) to the activation surface (148) by a rotational movement when moving the filter element (10) in the longitudinal direction (L) towards the blocking element (140).

2. The filter system according to claim 1, wherein the blocking element (140) comprises a spring member (150) comprising the activation surface (148) and a radially protruding lip (152), wherein the lip (152) is retractable from its blocking position by pushing the activation surface (148) in a radial direction.

3. The filter system according to anyone of the preceding claims, wherein the blocking element (140) comprises a locking structure (164) wherein the filter element (10) is locked to the blocking element (140) when the cam (188) is inserted into the locking structure (164) by a rotational movement of the filter element (10) after surpassing the activation surface (148) by the cam (188) in the longitudinal direction (L).

4. The filter system according to claim 3, wherein the locking structure (164) is configured as two neighbored ribs (166, 168) on a circumference of the blocking element (140).

5. The filter system according to anyone of the claims 2 to 4, wherein the filter element (10) is locked to the blocking element (140) by the lip (152) of the blocking element (140) when the cam (188) is moved to an end position (170) by a rotational movement of the filter element (10) after surpassing the activation surface (148) by the cam (188) in the longitudinal direction (L).

6. The filter system according to claim 5, wherein the lip (152) is overlapping a collar structure (26) of the end cap (20, 21) when the cam (188) is in its end position (170).

7. The filter system according to anyone of the preceding claims, wherein the unblocking element (180) comprises at least one cam (188) at a ring element (28), which is arranged inside the center pipe (14), particularly inside a water separator (30), wherein the cam (188) is pointing radially inwards.

8. The filter system according to claim 7, wherein the ring element (28) is arranged inside the center pipe (14) in a free rotatable manner, particularly in the water separator (30).

9. A safety assembly (130) for a filter system (100) according to any one of the preceding claims, the filter system (100) comprising a filter element (10) and a housing (110),
having a sealing area (144) and having a blocking mode and an unblocking mode depending on an axial and/or rotational position of the filter element (10) in the housing (110) and
being configured to provide access of a sealing structure (32) of the filter element (10) to a sealing area (144) of the safety assembly (130) in the unblocking mode and to block access of the sealing structure (32) of the filter element (10) to the sealing area (144) in the blocking mode when the sealing structure (32) of the filter element (100) is moved towards the sealing area (144),
having a first section (132) arranged at the housing (110) and a second section (134) arranged at the filter element (10), the first and second sections (132, 134) comprising at least one blocking element (140) and at least one unblocking element (180) configured to cooperate with the at least one blocking element (140),
the at least one blocking element (140) comprising an activation surface (148) and the at least one unblocking element (180) comprising a cam (188) for pushing the activation surface (148) in a radial direction when a contact between the cam (188) and the activation surface (148) is established such that the cam (188) can surpass the activation surface (148), **characterized in that** the blocking element (140) comprises a positioning structure (160) connected to a guiding groove (162) which leads the unblocking element (180) to the activation surface (148) by a rotational movement when moving the filter element (10) in the longitudinal direction (L) towards the blocking element (140).

## Patentansprüche

1. Filtersystem (100) umfassend ein Gehäuse (110) mit einem Gehäusekopf (112) und einem Gehäusedeckel (114), einem Fluideinlass (102), durch den ein zu filterndes Fluid in das Gehäuse (110) des Filtersystems (100) eintreten kann, und einem Fluidauslass (104), durch den ein gefiltertes Fluid austreten kann, und ein Filterelement (10), das in dem Gehäuse (110) aufgenommen ist, wobei das Filterelement (10) ein Mittelrohr (14) mit einer Längsrichtung (L) umfasst und von einem Filterbalg (12) umgeben ist, wobei der Filterbalg (12) an einem oder beiden seiner Endbereiche (16, 18) eine Endkappe (20, 21) umfasst, wobei das Filterelement (10) ferner eine Dichtungsstruktur (32), insbesondere eine Dichtung (34, 36), an der Endkappe (20, 21) umfasst,
wobei eine Sicherheitsbaugruppe (130) innerhalb des Gehäuses (110) angeordnet ist, die einen Sperrmodus und einen Entsperrmodus in Abhängigkeit von einer axialen und/oder Drehposition des Filterelements (10) im Gehäuse (110) hat und so konfiguriert ist, dass sie den Zugang der Dichtungsstruktur (32) des Filterelements (10) zu einem Dichtungsbereich (144) der Sicherheitsbaugruppe (130) im Entsperrmodus ermöglicht und den Zugang der Dichtungsstruktur (32) des Filterelements (10) zu dem Dichtungsbereich (144) der Sicherheitsbaugruppe (130) im Sperrmodus sperrt, wenn die Dichtungsstruktur (32) des Filterelements (100) in Richtung des Dichtungsbereichs (144) bewegt wird,
wobei die Sicherheitsbaugruppe (130) einen ersten Abschnitt (132), der am Gehäuse (110) angeordnet ist, und einen zweiten Abschnitt (134) aufweist, der am Filterelement (10) angeordnet ist, wobei der erste und der zweite Abschnitt (132, 134) mindestens ein Sperrelement (140) und mindestens ein Entsperrelement (180) umfassen, das so konfiguriert ist, dass es mit dem mindestens einen Sperrelement (140) zusammenwirkt,
wobei das mindestens eine Sperrelement (140) eine Aktivierungsfläche (148) umfasst und das mindestens eine Entsperrelement (180) einen Nocken (188) zum Drücken der Aktivierungsfläche (148) in eine radiale Richtung umfasst, wenn ein Kontakt zwischen dem Nocken (188) und der Aktivierungsfläche (148) hergestellt ist, so dass der Nocken (188) die Aktivierungsfläche (148) überwinden kann, **dadurch gekennzeichnet, dass** das Sperrelement (140) eine Positionierungsstruktur (160) umfasst, die mit einer Führungsnut (162) verbunden ist, die das Entsperrelement (180) beim Bewegen des Filterelements (10) in Längsrichtung (L) in Richtung des Sperrelements (140) durch eine Drehbewegung in Richtung der Aktivierungsfläche (148) führt.

2. Filtersystem nach Anspruch 1, wobei das Sperrelement (140) ein Federelement (150) umfasst, das die Aktivierungsfläche (148) und eine radial vorstehende Lippe (152) umfasst, wobei die Lippe (152) durch Drücken der Aktivierungsfläche (148) in radialer Richtung aus ihrer Sperrposition zurückziehbar ist.

3. Filtersystem nach einem der obigen Ansprüche, wobei das Sperrelement (140) eine Verriegelungsstruktur (164) umfasst, wobei das Filterelement (10) an dem Sperrelement (140) verriegelt ist, wenn der Nocken (188) durch eine Drehbewegung des Filterelements (10) nach Überwindung der Aktivierungsfläche (148) durch den Nocken (188) in Längsrichtung (L) in die Verriegelungsstruktur (164) eingeführt wird.

4. Filtersystem nach Anspruch 3, wobei die Verriegelungsstruktur (164) als zwei benachbarte Rippen (166, 168) an einem Umfang des Sperrelements (140) ausgebildet ist.

5. Filtersystem nach einem der Ansprüche 2 bis 4, wobei das Filterelement (10) durch die Lippe (152) des Sperrelements (140) an dem Sperrelement (140) verriegelt wird, wenn der Nocken (188) durch eine Drehbewegung des Filterelements (10) nach Überwindung der Aktivierungsfläche (148) durch den Nocken (188) in Längsrichtung (L) zu einer Endposition (170) bewegt wird.

6. Filtersystem nach Anspruch 5, wobei die Lippe (152) eine Kragenstruktur (26) der Endkappe (20, 21) überlappt, wenn sich der Nocken (188) in seiner Endposition (170) befindet.

7. Filtersystem nach einem der obigen Ansprüche, wobei das Entsperrelement (180) mindestens einen Nocken (188) an einem Ringelement (28) umfasst, das innerhalb des Mittelrohrs (14), insbesondere innerhalb eines Wasserabscheiders (30), angeordnet ist, wobei der Nocken (188) radial nach innen zeigt.

8. Filtersystem nach Anspruch 7, wobei das Ringelement (28) innerhalb des Mittelrohrs (14), insbesondere innerhalb des Wasserabscheiders (30), frei drehbar angeordnet ist.

9. Sicherheitsbaugruppe (130) für ein Filtersystem (100) nach einem der obigen Ansprüche, wobei das Filtersystem (100) ein Filterelement (10) und ein Gehäuse (110) umfasst,
mit einem Dichtungsbereich (144) und mit einem Sperrmodus und einem Entsperrmodus in Abhängigkeit von einer axialen und/oder Drehposition des Filterelements (10) im Gehäuse (110) und
die so konfiguriert ist, dass sie einer Dichtungsstruktur (32) des Filterelements (10) Zugang zu einem Dichtungsbereich (144) der Sicherheitsbaugruppe (130) im Entsperrmodus ermöglicht und den Zugang der Dichtungsstruktur (32) des Filterelements (10) zu dem Dichtungsbereich (144) im Sperrmodus sperrt, wenn die Dichtungsstruktur (32) des Filterelements (100) in Richtung des Dichtungsbereichs (144) bewegt wird,
mit einem ersten Abschnitt (132), der am Gehäuse (110) angeordnet ist, und einem zweiten Abschnitt (134), der am Filterelement (10) angeordnet ist, wobei der erste und der zweite Abschnitt (132, 134) mindestens ein Sperrelement (140) und mindestens ein Entsperrelement (180) umfassen, die so konfiguriert sind, dass sie mit dem mindestens einen Sperrelement (140) zusammenwirken,
wobei das mindestens eine Sperrelement (140) eine Aktivierungsfläche (148) aufweist und das mindestens eine Entsperrelement (180) einen Nocken (188) zum Drücken der Aktivierungsfläche (148) in eine radiale Richtung aufweist, wenn ein Kontakt zwischen dem Nocken (188) und der Aktivierungsfläche (148) hergestellt ist, so dass der Nocken (188) die Aktivierungsfläche (148) überwinden kann, **dadurch gekennzeichnet, dass** das Sperrelement (140) eine Positionierungsstruktur (160) umfasst, die mit einer Führungsnut (162) verbunden ist, die das Entsperrelement (180) durch eine Drehbewegung bei Bewegung des Filterelements (10) in Längsrichtung (L) in Richtung des Sperrelements (140) zur Aktivierungsfläche (148) führt.

## Revendications

1. Système de filtre (100) comprenant un boîtier (110) avec une tête de boîtier (112) et un couvercle de boîtier (114), une entrée de fluide (102) à travers laquelle un fluide à filtrer peut entrer dans le boîtier (110) du système de filtre (100) et une sortie de fluide (104) à travers laquelle un fluide filtré peut sortir et un élément filtrant (10) étant reçu dans le boîtier (110),
l'élément filtrant (10) comprenant un tuyau central (14) ayant une direction longitudinale (L) et étant entouré par un soufflet de filtre (12), le soufflet de filtre (12) comprenant une coiffe d'extrémité (20, 21) au niveau de l'une ou des deux de ses régions d'extrémité (16, 18), l'élément filtrant (10) comprenant en outre une structure d'étanchéité (32), notamment un joint d'étanchéité (34, 36), au niveau de la coiffe d'extrémité (20, 21),
dans lequel un ensemble de sécurité (130) est agencé à l'intérieur du boîtier (110), ayant un mode de blocage et un mode de déblocage dépendant d'une position axiale et/ou rotative de l'élément filtrant (10) dans le boîtier (110) et étant conçu pour fournir un accès de la structure d'étanchéité (32) de l'élément filtrant (10) à une zone d'étanchéité (144) de l'ensemble de sécurité (130) dans le mode de déblocage et pour bloquer un accès de la structure d'étanchéité (32) de l'élément filtrant (10) à la zone d'étanchéité (144) de l'ensemble de sécurité (130) dans le mode de blocage lorsque la structure d'étanchéité (32) de l'élément filtrant (100) est déplacée en direction de la zone d'étanchéité (144),
l'ensemble de sécurité (130) ayant une première section (132) agencée au niveau du boîtier (110) et une seconde section (134) agencée au niveau de l'élément filtrant (10), les première et seconde sections (132, 134) comprenant au moins un élément de blocage (140) et au moins un élément de déblocage (180) conçu pour coopérer avec l'au moins un élément de blocage (140),
l'au moins un élément de blocage (140) comprenant une surface d'activation (148) et l'au moins un élément de déblocage (180) comprenant une came (188) permettant de pousser la surface d'activation (148) dans une direction radiale lorsqu'un contact entre la came (188) et la surface d'activation (148) est établi de telle sorte que la came (188) peut dépasser la surface d'activation (148), **caractérisé en ce que** l'élément de blocage (140) comprend une structure de positionnement (160) reliée à une rainure de guidage (162) qui mène l'élément de déblocage (180) vers la surface d'activation (148) par un mouvement de rotation lors d'un déplacement de l'élément filtrant (10) dans la direction longitudinale (L) en direction de l'élément de blocage (140).

2. Système de filtre selon la revendication 1, dans lequel l'élément de blocage (140) comprend un élément de ressort (150) comprenant la surface d'activation (148) et une lèvre (152) faisant saillie radialement, dans lequel la lèvre (152) est rétractable de sa position de blocage en poussant la surface d'activation (148) dans une direction radiale.

3. Système de filtre selon l'une quelconque des revendications précédentes, dans lequel l'élément de blocage (140) comprend une structure de verrouillage (164) dans lequel l'élément filtrant (10) est bloqué à l'élément de blocage (140) lorsque la came (188) est insérée dans la structure de verrouillage (164) par un mouvement de rotation de l'élément filtrant (10) après dépassement de la surface d'activation (148) par la came (188) dans la direction longitudinale (L).

4. Système de filtre selon la revendication 3, dans lequel la structure de verrouillage (164) est conçue en tant que deux nervures voisines (166, 168) sur une circonférence de l'élément de blocage (140).

5. Système de filtre selon l'une quelconque des revendications 2 à 4, dans lequel l'élément filtrant (10) est verrouillé à l'élément de blocage (140) par la lèvre (152) de l'élément de blocage (140) lorsque la came (188) est déplacée à une position finale (170) par un mouvement de rotation de l'élément filtrant (10) après dépassement de la surface d'activation (148) par la came (188) dans la direction longitudinale (L).

6. Système de filtre selon la revendication 5, dans lequel la lèvre (152) chevauche une structure de collier (26) de la coiffe d'extrémité (20, 21) lorsque la came (188) est dans sa position finale (170).

7. Système de filtre selon l'une quelconque des revendications précédentes, dans lequel l'élément de déblocage (180) comprend au moins une came (188) au niveau d'un élément annulaire (28), qui est agencé à l'intérieur du tuyau central (14), notamment à l'intérieur d'un séparateur d'eau (30), dans lequel la came (188) pointe radialement vers l'intérieur.

8. Système de filtre selon la revendication 7, dans lequel l'élément annulaire (28) est agencé à l'intérieur du tuyau central (14) d'une manière librement rotative, notamment dans le séparateur d'eau (30).

9. Ensemble de sécurité (130) destiné à un système de filtre (100) selon l'une quelconque des revendications précédentes, le système de filtre (100) comprenant un élément filtrant (10) et un boîtier (110),
ayant une zone d'étanchéité (144) et ayant un mode de blocage et un mode de déblocage dépendant d'une position axiale et/ou rotative de l'élément filtrant (10) dans le boîtier (110) et
étant conçu pour fournir un accès d'une structure d'étanchéité (32) de l'élément filtrant (10) à une zone d'étanchéité (144) de l'ensemble de sécurité (130) dans le mode de déblocage et pour bloquer un accès de la structure d'étanchéité (32) de l'élément filtrant (10) à la zone d'étanchéité (144) dans le mode de blocage lorsque la structure d'étanchéité (32) de l'élément filtrant (100) est déplacée en direction de la zone d'étanchéité (144),
ayant une première section (132) agencée au niveau du boîtier (110) et une seconde section (134) agencée au niveau de l'élément filtrant (10), les première et seconde sections (132, 134) comprenant au moins un élément de blocage (140) et au moins un élément de déblocage (180) conçu pour coopérer avec l'au moins un élément de blocage (140),
l'au moins un élément de blocage (140) comprenant une surface d'activation (148) et l'au moins un élément de déblocage (180) comprenant une came (188) permettant de pousser la surface d'activation (148) dans une direction radiale lorsqu'un contact entre la came (188) et la surface d'activation (148) est établi de telle sorte que la came (188) peut dépasser la surface d'activation (148), **caractérisé en ce que** l'élément de blocage (140) comprend une structure de positionnement (160) reliée à une rainure de guidage (162) qui mène l'élément de déblocage (180) vers la surface d'activation (148) par un mouvement de rotation lors d'un déplacement de l'élément filtrant (10) dans la direction longitudinale (L) en direction de l'élément de blocage (140).
